# EUROPÄISCHE PATENTSCHRIFT

(11) **EP 2 013 006 B1**
(45) Veröffentlichungstag und Bekanntmachung des Hinweises auf die Patenterteilung: **12.01.2011**
(21) Anmeldenummer: 07726582.5
(22) Anmeldetag: 02.03.2007
(51) Int. Cl.: B29D 30/32

(54) **VORRICHTUNG ZUM HOCHSCHLAGEN EINES REIFENAUFBAUTEILES AUF EINER REIFENAUFBAUTROMMEL**
APPARATUS FOR UPTURN OF A TYRE-BUILDING COMPONENT ON A TYRE-BUILDING DRUM
DISPOSITIF POUR FRAPPER VERS LE HAUT UNE PIÈCE DE MONTAGE DE PNEUMATIQUE SUR UN TAMBOUR DE MONTAGE DE PNEUMATIQUE

(30) Priorität: 21.04.2006 DE 102006018508
(43) Veröffentlichungstag der Anmeldung: 14.01.2009
(73) Patentinhaber: Continental Reifen Deutschland GmbH, 30165 Hannover (DE)
(72) Erfinder: JUNGK, Andreas, 30900 Wedemark (DE); GERIGHAUSEN, Martin, 30890 Barsinghausen (DE)
(74) Vertreter: Finger, Karsten
(86) Internationale Anmeldenummer: PCT/EP2007/051982
(87) Internationale Veröffentlichungsnummer: WO 2007/122032

(56) Entgegenhaltungen:
- EP-A- 0 808 707
- WO-A-01/08874
- DE-C1- 19 934 791
- FR-A- 2 093 180
- US-A- 3 093 531
- US-A- 3 887 423

## Beschreibung

Die Erfindung betrifft eine Vorrichtung zum Hochschlagen eines Reifenaufbauteiles auf einer Reifenaufbautrommel mit einem Rollenhebel.

Bei der herkömmlichen Herstellung von Neureifen erfolgt ein Herstellungsschritt auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkerne gefaltet. Dieser Vorgang des Hochkrempelns der Reifenseitenwände erfolgt entweder mit sogenannten Seitenbombierbälgen oder mit einem kranzförmig über den Umfang angeordneten Rollenhebelsystem. Beim Einsatz von Seitenbombierbälgen werden zwei im Bereich der Seitenwandlagen angeordnete Blähbälge aufgeblasen, die auf diese Weise die Seitenwände an die bombierte Karkasse pressen. Der Hochschlagvorgang mit Hilfe von Seitenbombier-bälgen kann den Nachteil aufweisen, dass diese Bälge nicht bis in die Schulterbereiche des Reifenrohlings wirken, wodurch manuelle Nacharbeit erforderlich wird. Darüber hinaus sind die Seitenbombierbälge einem hohen Verschleiß unterworfen, wobei ein entsprechend häufiger Austausch erforderlich ist, der mit sehr viel Zeitaufwand verbunden ist.

Das Hochschlagen der Seitenwände mit Hilfe eines Rollenhebelsystems ist beispielsweise in der DE 199 34 791 C1 offenbart. Bei dieser Vorrichtung erfolgt das Auseinanderspreizen des Rollenhebelsystems über einen pneumatischen Antrieb, der aus zwei separaten Pneumatikzylindern besteht. Die beiden Pneumatikzylinder werden separat mit Druckluft beaufschlagt, wodurch das Reifenhebelsystem auseinanderspreizt und dadurch die Seitenwände an der Karkasse hochschlägt.

Die Druckschrift US 3093531 - A offenbart eine Reifenaufbautrommel und ein Flachbautrommelverfahren, bei dem die Einlagen der Karkasse mit Rollen am Reifenkern umgekrempelt werden.

Die Druckschrift FR 2093180 - A offenbart eine Reifenaufbautrommel, bei der die Seitenwände mit Rollenhebeln an der Reifenkarkasse hochgeschlagen werden.

Die Druckschrift EP 808707 - A offenbart eine weitere Reifenaufbautrommel, bei der die Seitenwände über seitlich angeordnete Rollenhebel an der Reifenkarkasse hochgeschlagen werden.

Ein wesentlicher Nachteil bei diesem Prinzip besteht darin, dass bei empfindlichen dünnen Seitenwänden und bestimmten Reifenkonstruktionen es durch die gegenläufige Drehbewegung der Rollen zu unlässigen Fehlern kommen kann, z. B. in Form einer Faltenbildung oder einer Materialverlagerung im Reifenrohling. Durch den Kontakt der Rollenmantelflächen, z. B. mit den Kernklemmsegmenten oder anderen Teilen der Reifenaufbautrommel, wird zu Beginn der Rollenhebelbewegung zwangsläufig eine Drehbewegung der Rollen erzeugt, die die Reifenaufbauteile in den Spalt zwischen Kernsegment und Rolle fördert und dadurch eine unzulässige Faltenbildung insbesondere bei dünnen Materialien begünstigt. Diese Faltenbildung kann zu einem Ausschuss des Reifenrohlings führen.

Der Erfindung liegt die Aufgabe zugrunde, eine Vorrichtung zum Hochschlagen eines Reifenaufbauteiles auf einer Reifenaufbautrommel zu schaffen, mit der das Reifenaufbauteil ohne Fehlstellen, insb. eine unbeabsichtigte Faltenbildung in der Seitenwand, hochgeschlagen wird.

Gelöst wird die Aufgabe gemäß dem Oberbegriff und den kennzeichnenden Merkmalen des Anspruchs 1 dadurch, dass beim Vorgang der Vorbereitung des Hochschlagens die Rolle und das Segment durch ein Beabstandungsmittel dergestalt beabstandet sind, dass die Rolle im Wesentlichen ausschließlich mit dem Reifenaufbauteil in Kontakt steht und die Rolle an dem Reifenaufbauteil entlang abrollt.

Ein Vorteil der Erfindung ist insbesondere darin zu sehen, dass durch die erfindungsgemäße Vorrichtung Falten und andere Fehler beim Hochschlagen der Seitenwand und der Wulstbauteile auf eine effiziente Weise vermieden werden. Die Rolle am Rollenhebel hat keinen Kontakt zum gegenüberliegenden Segment, wodurch die Rolle nicht an diesem Segment abrollt und eine gegenläufige Drehbewegung der Rolle das aufliegende Reifenaufbauteil unbeabsichtigt zusammenfaltet oder zusammenschiebt. Stattdessen steht die Rolle nunmehr im Wesentlichen ausschließlich mit dem aufliegenden Reifenaufbauteil in Kontakt und rollt somit in der Anfangsphase des Arbeitshubes bzw. bei der Vorbereitung des Hochschlagens des Reifenaufbauteiles auf dem Reifenaufbauteil entlang. Auf diese Weise werden Produktionsfehlstellen am Reifen, insbesondere an der Reifenseitenwand in einem hohen Maße unterbunden. Es können des Weiteren Reifen in einem erweiterten Dimensionsbereich als mit dem bisherigen Verfahren des Standes der Technik gefertigt werden.

Die Erfindung sieht vor, dass das Beabstandungsmittel eine Nocke am Rollenhebel und eine Nocke am gegenüberliegenden Segment umfasst, die beim Vorgang der Vorbereitung des Hochschlagens aufeinander gleiten. Die Nocke am Rollenhebel gleitet auf eine einfache Art und Weise auf der rampenförmigen Nocke des gegenüber liegenden Segmentes hoch. Die Gleitreibung bei diesem Vorgang ist vernachlässigbar gering.

Vorteilhafte Ausgestaltungen der Erfindung sind Gegenstand der Unteransprüche.

In einer vorteilhaften Weiterbildung der Erfindung ist vorgesehen, dass das zumindest eine der Nocken am Rollenhebel oder am Segment durch Wälzführungen oder eine Rollenlagerung ersetzt ist. Die auftretende Reibung zwischen derartigen Beabstandungsmitteln ist vernachlässigbar gering.

In einer weiteren vorteilhaften Weiterbildung der Erfindung ist vorgesehen, dass das Beabstandungsmittel ein mit dem Rollenhebel gekoppelter Aktuator ist. Ein solcher Aktuator würde dafür sorgen, dass zu jedem Zeitpunkt die Rolle von dem gegenüber liegenden Segment beabstandet ist.

In einer weiteren vorteilhaften Weiterbildung der Erfindung ist vorgesehen, dass der Rollenhebel mit einer Antihaftbeschichtung versehen ist. Auf diese Weise kann das auf den Rollen und dem Rollenhebel anliegende Reifenaufbauteil auf dem Rollenhebel mit einer geringen Reibung gleiten.

In einer weiteren vorteilhaften Weiterbildung der Erfindung ist vorgesehen, dass der Rollenhebel aus einem Metall besteht und sandgestrahlt ist. Eine Sandstrahlung des Metalls ist eine einfache Art, den Rollenhebel mit einer Antihaftbeschichtung zu versehen.

In einer weiteren vorteilhaften Weiterbildung der Erfindung ist vorgesehen, dass die Rolle mit einer Antihaftbeschichtung versehen ist. Dadurch wird gewährleistet, dass die Rolle auf dem Reifenaufbauteil abrollt und nicht dieses Material an der Rolle hängenbleibt.

In einer weiteren vorteilhaften Weiterbildung der Erfindung ist vorgesehen, dass zwei Rollen symmetrisch mittels einer Wälzlagerung am Rollenhebel angeordnet sind.

In einer weiteren vorteilhaften Weiterbildung der Erfindung ist vorgesehen, dass das Segment ein Kernspannsegment ist.

In einer weiteren vorteilhaften Weiterbildung ist vorgesehen, dass das Segment ein Kernspannsegment ist und eine Aufnahmemulde für die Rolle umfasst. Auf diese Weise wird die Rolle mit dem Rollenhebel in der Anfangsphase des Arbeitshubes vorab angehoben und in der Nähe des Reifenwulstes positioniert.

In einer weiteren vorteilhaften Weiterbildung ist vorgesehen, dass die Reifenaufbautrommel eine Vielzahl achsensymtrisch angeordneter Kernspannsegmente und Rollenhebel umfasst. Auf diese Weise wird gewährleistet, dass die Seitenwand des herzustellenden Reifens an allen Stellen gleichmäßig hochgerollt wird.

In einer weiteren vorteilhaften Weiterbitdung ist vorgesehen, dass beim Vorgang der Vorbereitung des Hochschlagens die Kernspannsegmente auseinander fahren und dadurch die Rollen mit dem Rollenhebel anhebt.

In einer weiteren vorteilhaften Weiterbildung ist vorgesehen, dass die Rollenhebel drehbar mit einem axial verfahrbaren Bauteil der Reifenaufbautrommel gekoppelt sind und beim Hochschlagen auseinanderfahren.

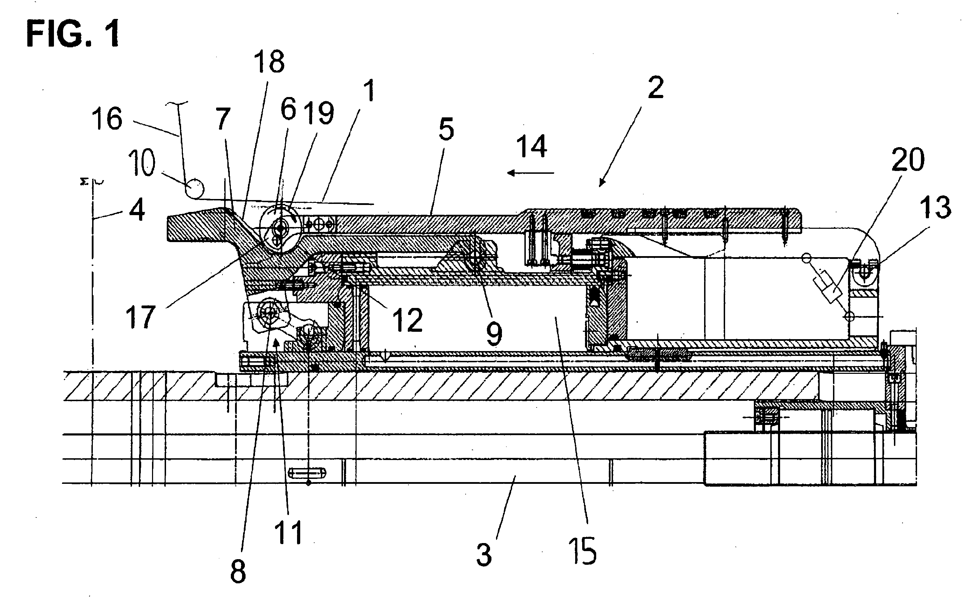

Anhand eines Ausführungsbeispiels soll die Erfindung näher erläutert werden. Die Figur 1 zeigt einen Teilausschnitt einer Reifenaufbautrommel 2 mit der erfindungsgemäßen Vorrichtung zum Hochschlagen eines Reifenaufbauteiles 1, welches u.a. die Reifenseitenwand des herzustellenden Reifens bildet. Die Reifenaufbautrommel 2 ist im Wesentlichen achsensymmetrisch zur Trommelachse 3 und zur Trommelmitte 4 aufgebaut, weshalb die Darstellung der jeweils gegenüberliegenden Bauteile in der Figur nicht dargestellt sind.

Am Rollenhebel 5 sind an einem Ende zwei Rollen 6 angeordnet, wobei in dieser Seitenansicht nur eine Rolle sichtbar ist. Die zweite Rolle liegt direkt hinter der ersten Rolle, wobei beide Rollen in der Aufsicht des Rollenhebels 5 symmetrisch angeordnet sind und mittels einer Wälzlagerung mit dem Rollenhebel 5 drehbar verbunden sind. Gegenüberliegend zum Rollenhebel 5 ist ein Segment 7 angeordnet, welches aufgrund seiner Funktion ein Kernspannsegment ist. Das Segment 7 ist über zwei Drehpunkte 8 und 9 mit einem Bauteil der Reifenaufbautrommel 2 verbunden. Das Segment 7 bewegt sich in einem ersten Arbeitsschritt zum Einspannen des Reifenkerns 10 radial nach außen. Diese Bewegung wird durch die Antriebsmittel 11 realisiert. Durch das Auseinanderfahren der Segmente 7 werden ebenfalls die Rollen 6, die in einer Mulde 12 des Segmentes 7 liegen, entsprechend angehoben. Das Reifenaufbauteil 1 liegt im Wesentlichen an der Rolle 6 an. Der Rollenhebel 2 ist im Drehpunkt 13 drehbar gelagert und wird über die Betätigung des Pneumatikzylinders 15 in die axiale Richtung 14 bewegt. Zunächst erfolgt ein Vorgang der Vorbereitung des Hochschlagens des Reifenaufbauteiles bzw. der Vorgang der Anfangsphase des Arbeitshubes. Ziel dieser Anfangsphase des Arbeitshubes ist es, dass die Rollen 6 direkt im unteren Bereich des Reifenwulstes positioniert werden. Ernst danach erfolgt das Hochschlagen der Seitenwände, in dem die Rollen 6 das Reifenaufbauteil 1 gegen die bombierte Reifenkarkasse 16 hochrollen. Dieses Hochschlagen erfolgt durch eine weitere axiale Bewegung des Rollenhebels 2, die bei dieser Bewegung sozusagen auseinanderspreizen. Der Rollenhebel 5 besitzt als Verlängerung eine Nocke 17. Gegenüberliegend ist eine Nocke 18 am Segment 7 angeordnet. Beide Nocken stellen das erfindungsgemäße Beabstandungsmittel dar. In der Anfangsphase des Arbeitshubes gleitet die Nocke 17 des Rollenhebels 5 auf der rampenförmigen Nocke 18 des Segmentes 7 nach oben direkt an den Reifenwulst heran. Die Rolle 6 hat bei diesem Vorgang keinen Kontakt zum Segment 7, da diese durch eine Spalt beabstandet sind. Die Rolle 6 hat im Wesentlichen ausschließlich einen Kontakt mit dem aufliegenden Reifenaufbauteil 1, wodurch die Rolle 6 in Drehrichtung 19 auf dem Reifenaufbauteil 1 entlang rollt. Dadurch schiebt die Rolle 6 das Material des Reifenaufbauteiles 1 nicht vor sich her und es kommt nicht zu einer unzulässigen Faltenbildung, die zu einem Ausschuss des Reifens führen würde. Nach dieser Anfangsphase des Arbeitshubes erfolgt das eigentliche Hochschlagen der Seitenwände und eine weitere Konfektionierung des Reifens nach einem herkömmlichen Verfahren.

In einem weiteren nicht dargestellten Ausführungsbeispiel wird eine der Nocken 17 oder 18 durch Wälzführung oder kleine Rollen ersetzt, die sodann das Beabstandungsmittel darstellen. Alternativ könnte ein Aktuator 20 eingesetzt werden. Ein solcher Aktuator 20, der von unten auf den Rollenhebel 5 einwirkt, sorgt dafür, dass die Rollen 6 des Rollenhebels 2 zu keinem Zeitpunkt mit dem Segment 7 kontaktieren und damit auf diesen abrollen können. Der Aktuator 20 könnte über eine elektronische Regelung gesteuert werden.

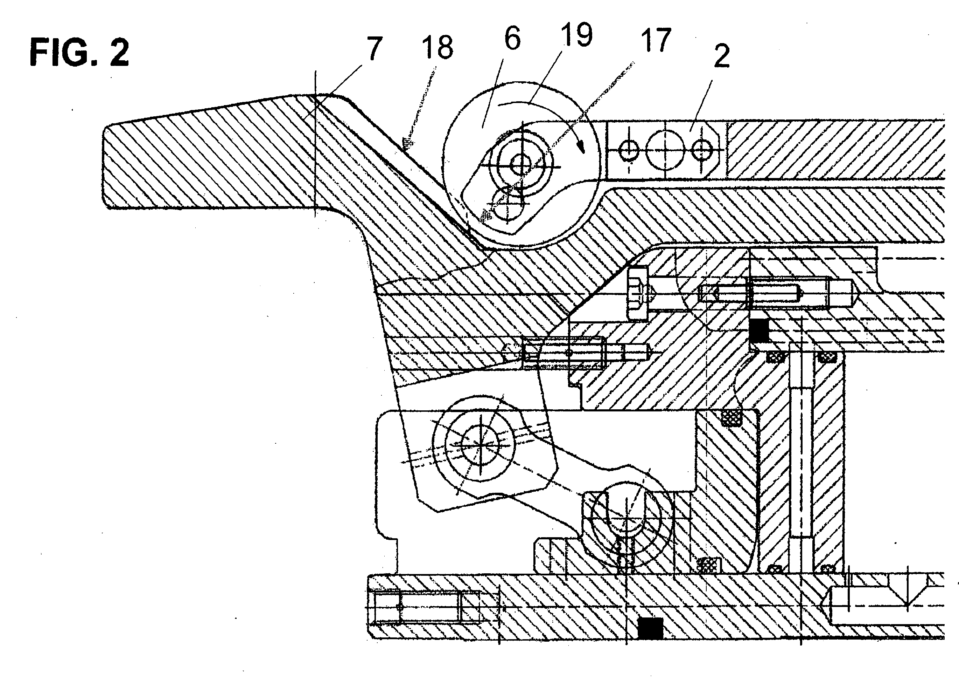

Die Figur 2 zeigt eine Vergrößerung eines Teilausschnittes der Figur 1. Die Rolle 6 hat keinen Kontakt zum Segment 7 bei der Anfangsphase des Arbeitshubes. Die Nocke 17 des Reifenhebels 2 gleitet an der rampenförmigen Nocke 18 des Segmentes 7 hinauf, wobei die Rolle 6 in der gezeigten Drehrichtung 19 auf dem nicht dargestellten Reifenaufbauteil abrollt.

### Bezugszeichenliste

### (ist Teil der Beschreibung)

- 1: Reifenaufbauteil
- 2: Reifenaufbautrommel
- 3: Trommelachse
- 4: Trommelmitte
- 5: Rollenhebel
- 6: Rollen
- 7: Segment
- 8: Drehpunkt
- 9: Drehpunkt
- 10: Reifenkern
- 11: Antriebsmittel
- 12: Mulde
- 13: Drehpunkt
- 14: Axiale Richtung
- 15: Pneumatikzylinder
- 16: Reifenkarkasse
- 17: Nocke
- 18: Nocke
- 19: Drehrichtung der Rollen
- 20: Aktuator

## Patentansprüche

1. Vorrichtung zum Hochschlagen eines Reifenaufbauteiles (1)auf einer Reifenaufbautrommel (2) mit einem Rollenhebel (5) an dem mindestens eine drehbar gelagerte Rolle (6) angeordnet ist und mit einem zum Rollenhebel (2) gegenüberliegend angeordneten Segment (7),
wobei der Rollenhebel (5) gegenüber dem Segment (7) beweglich angeordnet ist,
wobei beim Vorgang der Vorbereitung des Hochschlagens die Rolle (6) und das Segment (7) durch ein Beabstandungsmittel (17, 18) dergestalt beabstandet sind, dass die Rolle (6) im Wesentlichen ausschließlich mit dem Reifenaufbauteil (1) in Kontakt steht und die Rolle (6) an dem Reifenaufbauteil (1) entlang abrollt,
**dadurch gekennzeichnet, dass**
das Beabstandungsmittel eine Nocke (17) am Rollenhebel (5) und eine Nocke (18) am gegenüberliegenden Segment (7) umfasst, die beim Vorgang der Vorbereitung des Hochschlagens aufeinander gleiten.

2. Vorrichtung nach Anspruch 1,
**dadurch gekennzeichnet, dass**
zumindest eine der Nocken (17, 18) am Rollenhebel (5) oder am Segment (7) durch Wälzführungen oder eine Rollenlagerung ersetzt ist.

3. Vorrichtung nach Anspruch 1 oder 2,
**dadurch gekennzeichnet, dass**
das Beabstandungsmittel ein mit dem Rollenhebel (5) gekoppelter Aktuator (19) ist.

4. Vorrichtung nach einem der vorhergehenden Ansprüche,
**dadurch gekennzeichnet, dass**
der Rollenhebel (5) mit einer Antihaftbeschichtung versehen ist.

5. Vorrichtung nach einem der vorhergehenden Ansprüche,
**dadurch gekennzeichnet, dass**
der Rollenhebel (5) aus einem Metall besteht und sandgestrahlt ist.

6. Vorrichtung nach einem der vorhergehenden Ansprüche,
**dadurch gekennzeichnet, dass**
die Rolle (6) mit einer Antihaftbeschichtung versehen ist.

7. Vorrichtung nach einem der vorhergehenden Ansprüche,
**dadurch gekennzeichnet, dass**
zwei Rollen (6) symmetrisch mittels einer Wälzlagerung am Rollenhebel (5) angeordnet sind.

8. Vorrichtung nach einem der vorhergehenden Ansprüche,
**dadurch gekennzeichnet, dass**
das Segment (7) ein Kernspannsegment ist.

## Claims

1. Device for turning up a tire-building component (1) on a tire-building drum (2) with a roller lever (5) on which at least one rotatably mounted roller (6) is arranged, and with a segment (7) which is arranged opposite the roller lever (5),
wherein the roller lever (5) is arranged to be movable with respect to the segment (7),
wherein during the process of preparing the turning up the roller (6) and the segment (7) are spaced apart from one another by means of a spacer (17, 18) in such a way that the roller (6) is essentially in contact only with the tire-building component (1), and the roller (6) rolls along the tire-building component (1), **characterized in that** the spacer comprises a cam (17) on the roller lever (5), and a cam (18) on the segment (7) which is located opposite, said cams (17, 18) sliding one on the other during the process of preparing the turning up.

2. Device according to Claim 1, **characterized in that** at least one of the cams (17, 18) on the roller lever (5) or on the segment (7) is replaced by rolling guides or a roller bearing.

3. Device according to one of Claim 1 or 2, **characterized in that** the spacer is an actuator (19) which is coupled to the roller lever (5).

4. Device according to one of the preceding claims, **characterized in that** the roller lever (5) is provided with an anti-stick coating.

5. Device according to one of the preceding claims, **characterized in that** the roller lever (5) is composed of a metal and is sand-blasted.

6. Device according to one of the preceding claims, **characterized in that** the roller (6) is provided with an anti-stick coating.

7. Device according to one of the preceding claims, **characterized in that** two rollers (6) are arranged symmetrically by means of a roller bearing on the roller lever (5).

8. Device according to one of the preceding claims, **characterized in that** the segment (7) is a coretensioning segment.

## Revendications

1. Dispositif de relèvement par percussion d'une pièce (1) de montage de bandage de roue sur un tambour (2) de montage de bandage de roue, qui présente un levier (5) à galet sur lequel au moins un galet (6) monté à rotation est disposé et un segment (7) disposé face au levier (5) à galet,
le levier (5) étant disposé à déplacement par rapport au segment (7),
le galet (6) et le segment (7) étant maintenus à distance par un moyen (17, 18) d'écartement lors de l'opération de préparation du relèvement par percussion, de telle sorte que le galet (6) soit en contact essentiellement uniquement avec la pièce (1) de montage de bandage de roue et que le galet (6) roule le long de la pièce (1) de montage de bandage de roue,
**caractérisé en ce que**
le moyen d'écartement comprend une came (17) prévue sur le levier (5) à galet et une came (18) sur le segment (7) opposé, ces cames coulissant l'une sur l'autre lors de l'opération de préparation du relèvement par percussion.

2. Dispositif selon la revendication 1, **caractérisé en ce qu'**au moins l'une des cames (17, 18), celle prévue sur le levier (5) à galet ou celle prévue sur le segment (7), est remplacée par des guides de roulement ou un palier de roulement.

3. Dispositif selon les revendications 1 ou 2, **caractérisé en ce que** le moyen d'écartement est un actionneur (19) couplé au levier (5) à galet.

4. Dispositif selon l'une des revendications précédentes, **caractérisé en ce que** le levier (5) à galet est doté d'un revêtement antiadhésif.

5. Dispositif selon l'une des revendications précédentes, **caractérisé en ce que** le levier (5) à galet est constitué d'un métal et est sablé.

6. Dispositif selon l'une des revendications précédentes, **caractérisé en ce que** le galet (6) est doté d'un revêtement antiadhésif.

7. Dispositif selon l'une des revendications précédentes, **caractérisé en ce que** deux galets (6) sont disposés symétriquement sur le levier (5) à galet au moyen d'un palier de roulement.

8. Dispositif selon l'une des revendications précédentes, **caractérisé en ce que** le segment (7) est un segment de serrage d'âme.
